# EUROPEAN PATENT APPLICATION

(11) **EP 4 617 929 A1**
(43) Date of publication of application: **17.09.2025**
(21) Application number: 24162579.7
(22) Date of filing: 11.03.2024
(51) Int. Cl.: G06F 21/57

(54) **OFFLINE DEVICE ATTESTATION USING A SMALL, PORTABLE DEVICE**

(71) Applicant: ABB SCHWEIZ AG, 5400 Baden (CH)
(72) Inventor: FINSTER, Soeren, 76139 Karlsruhe (DE); KOHNHAEUSER, Florian, 64560 Riedstadt (DE); DAWOUD, Abdallah, 66121 Saarbrücken (DE)
(74) Representative: Maiwald GmbH

(57) **Abstract**

The invention relates to the field of security measures, particularly for checking and/or for signalling a security health status of a computer. The invention further relates to device for realizing this, to a use, to a method, to a non-transitory computer-readable storage medium, and to an application program, App.

The invention relates to a device (10) for checking and/or signalling a security health status of a computer (20). The device (10) comprises a security checking unit (12), configured for performing a remote attestation procedure in cooperation with the computer (20); an interface (16) configured for connecting to the computer (20); and a security indication unit (14), configured for indicating the security health status of the computer (20).

## Description

### Field of the Invention

The invention relates to the field of security measures, particularly for checking and/or for signalling a security health status of a computer. The invention further relates to device for realizing this, to a use, to a method, to a non-transitory computer-readable storage medium, and to an application program, App.

### Background

The so-called "remote attestation" procedure is a security solution that allows a computer - often called "verifier" - to remotely check an integrity of another computer, the so-called "prover". During remote attestation, the verifier may determine whether the software running on the prover is healthy or compromised, which enables the verifier to remotely establish trust in the prover. However, in case of a network disruption, the remote attestation is no longer possible, since existing solutions may rely on network connectivity and, thus, checking the prover's security health status may no longer possible in such cases.

### Description

It is an objective of the disclosure to provide a method or device for checking a security health status of a computer. This objective is achieved by the subject-matter of the independent claims. Further embodiments are evident from the dependent claims and the following description.

One aspect relates to a device for checking and/or signalling a security health status of a computer. The device comprises a security checking unit, configured for performing a remote attestation procedure in cooperation with the computer; an interface configured for connecting to the computer; and a security indication unit, configured for indicating the security health status of the computer.

The computer, whose security health status is checked - in other words: the device to be attested - may also be called a "prover". The computer may be a standalone computing device, i.e. without network connection, it may be with temporary and/or intermittent or recurring network connection, or with a kind of fixed network connection, wired and/or wireless. The computer may be an industrial device, i.e. a computing device that is configured for a function in an industrial plant, which may, e.g., run chemical, mechanical and/or other processes. Examples for the industrial device may comprise sensors, actuators, and/or control units. The device for checking and/or signalling said security health status may also be called a "verifier". The device may, for instance, be a special device, it may be part of any computing device, particularly of a mobile device, e.g. a small, portable device, and/or it may be a so-called "App" (application program), particularly on a mobile device. Checking and/or signalling the security health status may comprise to find out if the computer is (and/or has been) compromised or not.

The security checking unit is configured for performing a remote attestation procedure in cooperation with the computer. "In cooperation" may be interpreted that a part of the attestation procedure is also run on the computer, e.g. at least some "acknowledge" signals that need to be sent by the computer. To this end, the security checking unit and/or the computer may be pre-configured for performing said remote attestation procedure. For example, the portable device may have one or more pre-configured trust-relationships for establishing secure communication with the computer, e.g., a certificate and private key material for this certificate. In addition, this certificate may be marked trustworthy for the computer. Additional trust-anchors may be added, e.g., root certificates for TPMs (Trusted Platform Module).

In at least some embodiments, the computer may implement relaxed security checks of the portable device; this may be advantageous in cases when the verifier device is intended and/or configured for being used in close physical proximity to the computer. Then, less pre-configuration may be necessary, but this may bear a risk of exposure of potentially confidential data to attackers with physical access. Hence, this may be used for areas with restricted access, e.g. in "service personnel only" areas.

The verifier device may hold a list of valid security health configurations for all computers the portable device is intended to be used on. This list may be statically deployed on the device and/or updated, e.g. periodically and/or on demand. For an easy and/or "always up to date" update, the verifier device may be continuously connected to a management system, which is connected to a "regular" remote attestation system, e.g. a specialized server.

For performing a remote attestation procedure, the verifier device may use a security health checking protocol like the so-called Keylime protocol, which may allow the portable device to pull attestation data from the computer and to check its validity, possibly including the validity of all included data, for example TPM quotes. Such attestation data may include a quote over the TPM's PCRs (Platform Configuration Register), PCR values, a Node Key public key, an IMA (Integrity Measurement Architecture) log, UEFI (Unified Extensible Firmware Interface) event log, and/or further data of interest. The verifier device may, then, be able to check the valid attestation data against the list of valid security health configurations and, based on this, to determine the security health status of the computer.

The interface that connects to the computer may be designed to cooperate with the computer. For instance, if the interface is a USB interface (USB: Universal Serial Bus), the computer may need to allow to be accessed by a USB device, particularly by the "verifier" device that is selected for checking the computer. Pre-configured conditions, in the computer, in the verifier device and/or in the interface may apply. In at least some cases, other USB devices may be excluded from accessing the computer. Additionally or as an alternative, the interface may be any wired and/or wireless interface, possibly enriched with dedicated security measures.

The security indication unit is configured for indicating the security health status of the computer. To this purpose, the security indication unit may, in a simple case, be an LED (Light-Emitting Diode) that is configured for emitting a red or green light, e.g. red for "compromised" and green for "not compromised". Additionally or as an alternative, the security indication unit may comprise a display that shows the computer's health status and/or some details related to the health status. And/or, the security indication unit may comprise a unit that is configured for sending a health status related message, e.g. by wired and/or wireless means. The security health status may be determined by checking a plurality of data that is relevant to the security health status of the computer. This data may be shown or not by the security indication unit, but said data may be stored on the verifier device, e.g. for performing for further investigations.

This device may advantageously enable a quick and easy offline verification of the security health status of any computer of interest. Moreover, the security health status can be signalled virtually immediately. This may support service personnel in a reliable decision if a computer is ready to be re-connected to the network, or if it is wiser to avoid this. Such an "ad-hoc verification" may even be done without a lengthy training of the personnel. For instance, a cyber-security engineer can send an untrained person for checking the security health status of the computer(s) of interest. This may advantageously increase the work capacity of the cyber-security engineer. This may be particularly important in cases of an attack, in which the cyber-security engineer is usually under heavy load. Using such a verifier device eases a collection of security-related information without network connection. In addition, only minimal training may be required for enabling a person to work with the verifier device. Further advantageously, the verifier device may bring remote attestation to use-cases that currently have no attestation possibilities. This may include an application of attestation procedures to devices, which do not have network connections capable of performing remote attestation procedures; examples may comprise field devices that are only connect via fieldbus connections. Additionally or as an alternative, the verifier device may be used after service disruptions, where no reliable security health status of the computers of the separated network is available. In an embodiment, the verifier device may be implemented as a "verifier on a stick".

In various embodiments, the interface is a Universal Serial Bus, USB. This connection may advantageously be available on almost all computers and devices. Using a USB interface may be a way to implement a "verifier on a stick" device.

In various embodiments, the interface is a Human Interface Device, HID. Using HID for communication advantageously allows a software architecture without a device driver on the computer.

In various embodiments, the interface is a serial connection. Examples may comprise RS-232, SPI, I²C, UNI/O, 1-Wire, and/or further serial connections.

In various embodiments, the interface is a Near Field Communication, NFC, connection. An NFC connection may be used by a so-called "RFID (Radio-Frequency Identification) tag" and/or by a mobile device, such as a smart-phone. Using a smart-phone may be advantageous, because most commercial smart-phones have good protection measures against security breaches, so that using the NFC connection may be in a secure environment.

In various embodiments, the security indication unit is an LED, LCD or LCD display, an electronic paper display, an acoustical apparatus, and/or a vibration apparatus. The acoustical apparatus may, e.g., be a dynamic or piezoelectric speaker. The LED may show red or green, as a simple but very useful feedback. The LCD display and/or the electronic paper display may be designed for displaying explanatory words (e.g., "OK", "compromised", etc.) Additionally or as an alternative, more information may be displayed, e.g. significant variables, keys, procedures, error codes, and/or reasons for failing. Additionally or as an alternative, a wireless communications interface may be used for security indication, e.g. by sending one or more messages to an external device, e.g. via Bluetooth, SMS, and/or by other means.

In various embodiments, the device further comprises an internal memory, the internal memory being configured for saving results of the checking and/or signalling a security health status of the computer. This may be used for checking one or more computers on-site for their a security health status and, after returning to a base, to be able to perform detailed analyses by a cyber-security engineer, e.g. on causes of a security breach. In an embodiment, this internal memory may be set up to be encrypted and only readable by certain authorized readers (e.g., cybersecurity engineers, management systems).

In various embodiments, the device is designed as a portable device. An example may be a "verifier on a stick", which is particularly advantageous for on-site service and/or diagnosis, particularly short-term diagnosis.

An aspect relates to a use of a device as described above and/or below for checking and/or signalling a security health status of a computer, particularly in a scenario after a disruption of a connection between the computer and an external network. For the checking and/or signalling it is not necessary that the computer experienced the network disruption; however, this may be a scenario, in which using this device may be particularly advantageous.

An aspect relates to a use of the device as described above and/or below for connecting, particularly after the disruption of the network connection, the computer to the external network. The checking and/or signalling of the security health status may also be advantageous to secure an initial secure start of the computer and/or in other security-relevant cases. In cases of a disruption of the network connection, a security incident may have led to a network shutdown. Then, a person with minimal training may travel to a production line (e.g. in cases when the computer is an industrial device), check all of the computers using said verifier device, and may return with the results of all computers to a cyber-security engineer, for discussing next steps. If all computers have been checked as being "OK", network connections for that specific production line could be re-enabled and that production line could run again, with trust on their security status.

An aspect relates to a method for checking and/or signalling a security health status of a computer. The method comprises the steps of:
Connecting a device as described above and/or below, via an interface of the device, to the computer;
Checking, by means of a security checking unit of the device, the security health status of the computer; and
Indicating, by means of a security indication unit of the device, the security health status.

In various embodiments, the method further comprises the step of noticing a disruption of a network connection between the computer and an external network. The external network may, e.g., be a WAN (Wide Area Network), such as "the Ethernet", connected via WLAN or cable.

In various embodiments, the method further comprises the steps of saving results of the checking and/or signalling a security health status of the computer; and evaluating the results, particularly on a further computer.

An aspect relates to a non-transitory computer-readable storage medium having a program stored therein, which, when executed on a processor of a device described above and/or below instructs the device to carry out the steps described above and/or below.

An aspect relates to an application program, App, configured for carrying out the steps as described above and/or below. The App may be installed and/or may operate on a mobile device, e.g. on a smart-phone. The smart-phone may forward information from the computer to other devices, e.g. via WLAN, Bluetooth, or telecommunication, e.g. 2G, 3G, 4G, 5G, 6G. It may be further advantageous that most mobile phones have often dedicated high-level security protection mechanisms, thereby also protecting this application program.

An aspect relates to an App, which is configured to communicate with the portable verifier device in order to enhance the security indication unit with a rich user interface and/or provide control of the security checking.

For further elucidation, the disclosure is described by means of embodiments shown in the figures. These embodiments are to be considered as examples only, but not as limiting.

### Brief Description of the Drawings

The drawings depict:
- **Fig. 1**: schematically a scenario according to an embodiment;
- **Fig. 2**: schematically a device according to an embodiment;
- **Fig. 3**: schematically a part of a device according to an embodiment;
- **Fig. 4**: a flow diagram according to an embodiment.

### Detailed Description of Embodiments

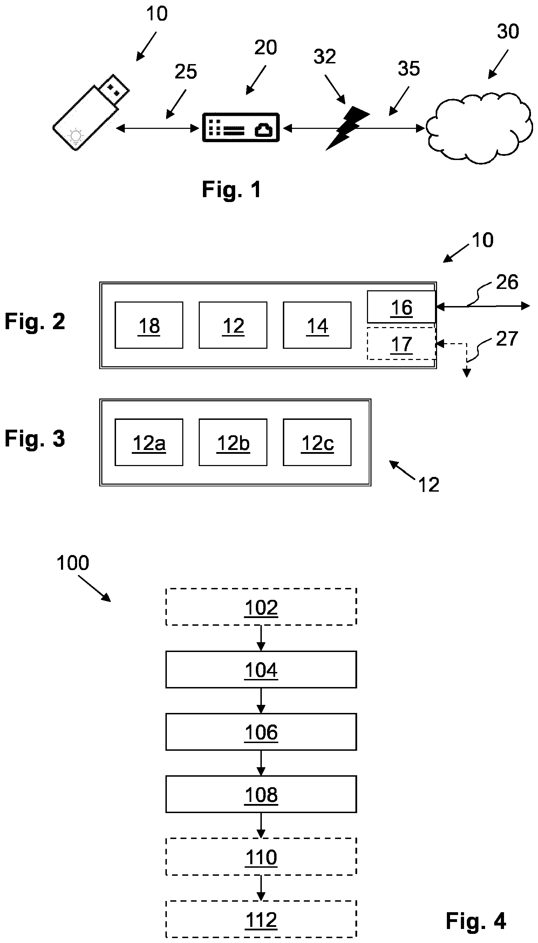

**Fig. 1** shows schematically a scenario according to an embodiment. The scenario comprises a computer 20, e.g. a personal computer or an industrial device, e.g. a sensor, actor, or a controller. The computer 20 is connected, via a network connection 35, to a network 30, e.g. an Ethernet network, a fieldbus, and/or another kind of network. In some cases, a disruption 32 of the network 35 may occur. Then, a device or verifier device 10 may be used for checking and/or for signalling a security health status of the computer 20 using an interface 25.

**Fig. 2** shows schematically details of the device 10 of **Fig. 1****.** The device 10 comprises a security checking unit 12, configured for performing a remote attestation procedure in cooperation with the computer 20 (see **Fig. 1**). To this end, the security checking unit 12 may run a security protocol and/or a security checking protocol in cooperation with the computer 20. The device 10 may be connected to the computer 20 via connection 26 by means of an interface 16. The connection 26 may be a wired and/or a wireless connection. Examples of the connection 26 may comprise a USB connection, an HID connection, a serial connection, an NFC connection, a Bluetooth connection, and/or further connection types. The interface 16 may be designed to suite to the connection 26. The device 10 may, optionally, comprise a management connection 17. The management connection 17 may be used - alone or along with the interface 16 -, e.g. for controlling and/or updating the device 10, particularly for keeping security health configurations up to date.

The result of having run the security protocol and/or the security checking protocol may be communicated to outside via a security indication unit 14, e.g. by optical, acoustical, haptic, and/or electromagnetic means. The security indication unit may comprise, for instance, an LED, LCD, an electronic paper display, an acoustical apparatus, and/or a (haptic) vibration apparatus. The device 10 may further comprise an internal memory 18. The internal memory 18 may be used for recording results and/or details of the security protocol and/or the security checking protocol. This may comprise error codes, a timestamp, addresses, internal variables, statuses, and/or further information. The information gathered in the internal memory 18 may be used for further investigations, e.g. on causes of a security breach. Additionally or as an alternative, the memory 18 may hold an operational status and/or operational details of the computer 20, particularly in cases when the computer 20 is an industrial device.

**Fig. 3** shows schematically a part of a device 10 (see, e.g., **Fig. 2**) according to an embodiment, namely the security checking unit 12. The security checking unit 12 comprises an authentication and verification unit 12a, particularly for performing a remote attestation procedure in cooperation with the computer 20 (see **Fig. 1**). For performing said procedure, the security checking unit 12 comprises an attestation protocol implementation 12b. The security checking unit 12 further comprises valid security health configurations 12c, which may be updated on a regular basis.

**Fig. 4** shows a flow diagram 100 according to an embodiment. In an optional step 102, a disruption of a network connection 35 between the computer 20 and an external network 30 may be noticed. This may cause a need for checking and/or signalling a security health status of a computer 20, before the computer 20 can or should be re-connected. The method for checking and/or signalling a security health status of a computer 20 comprises a step 104, in which device 10 as described above and/or below is connected to the computer 20. Then, in a step 106, the security health status of the computer 20 is checked, by means of a security checking unit 12. Afterwards, in a step 108, the security health status is indicated, by means of a security indication unit 14. In an optional step 110, results of the checking and/or signalling a security health status of the computer 20 are saved, e.g. in an internal memory 18 of the device 10. In an optional step 112 the results are evaluated, particularly on a further computer.

### List of Reference Symbols

- 10: device, verifier device
- 12: security checking unit
- 12a: authentication and verification unit
- 12b: attestation protocol implementation
- 12c: valid security health configurations
- 14: security indication unit
- 16: interface
- 17: management connection
- 18: internal memory
- 20: computer, industrial device
- 30: an external network
- 32: network disruption
- 35: network connection
- 100: flow diagram
- 102-112: steps

## Claims

1. A device (10) for checking and/or signalling a security health status of a computer (20), the device (10) comprising:
a security checking unit (12), configured for performing a remote attestation procedure in cooperation with the computer (20);
an interface (16) configured for connecting to the computer (20); and
a security indication unit (14), configured for indicating the security health status of the computer (20).

2. The device (10) of claim 1,
wherein the interface (16) is a Universal Serial Bus, USB.

3. The device (10) of claim 1,
wherein the interface (16) is a Human Interface Device, HID.

4. The device (10) of claim 1,
wherein the interface (16) is a serial connection.

5. The device (10) of claim 1,
wherein the interface (16) is a Near Field Communication, NFC, connection.

6. The device (10) of claim 1,
wherein the security indication unit (14) is an LED, LCD, an electronic paper display, an acoustical apparatus, and/or a vibration apparatus.

7. The device (10) of any one of the preceding claims, further comprising an internal memory (18),
the internal memory (18) being configured for saving results of the checking and/or signalling a security health status of the computer (20).

8. The device (10) of any one of the preceding claims, wherein the device (10) is designed as a portable device.

9. Use of a device (10) according to any one of the preceding claims for checking and/or signalling a security health status of a computer (20), particularly in a scenario after a disruption (32) of a connection (35) between the computer (20) and an external network (30), and/or
for connecting, particularly after the disruption (32) of the network connection (35), the computer (20) to the external network (30).

10. A method for checking and/or signalling a security health status of a computer (20), the method comprising the steps of:
connecting a device (10) according to any one of the claims 1-8, via an interface (16) of the device (10), to the computer (20);
checking, by means of a security checking unit (12) of the device (10), the security health status of the computer (20); and
indicating, by means of a security indication unit (14) of the device (10), the security health status.

11. The method of claim 10, further comprising the step of:
noticing a disruption (32) of a network connection (35) between the computer (20) and an external network (30).

12. The method of claim 10 or 11, further comprising the step of:
saving results of the checking and/or signalling a security health status of the computer (20); and
evaluating the results, particularly on a further computer.

13. A non-transitory computer-readable storage medium having a program stored therein, which, when executed on a processor of a device (10) according to any one of the claims 1-8 instructs the device (10) to carry out the steps according to any one of the claims 10 - 12.

14. An application program, App, configured for carrying out the steps according to any one of the claims 10 - 12.
